# FASCICULE DE BREVET EUROPEEN

(11) **EP 1 479 583 B1**
(45) Date de publication et mention de la délivrance du brevet: **17.12.2008**
(21) Numéro de dépôt: 04011651.9
(22) Date de dépôt: 17.05.2004
(51) Int. Cl.: B60T 13/57

(54) **Amplificateur à dépression pour l'assistance au freinage d'un véhicule automobile**
Unterdruckbremskraftverstärker für ein Kraftfahrzeug
vacuum brake booster for a vehicle

(30) Priorité: 22.05.2003 FR 0306373
(43) Date de publication de la demande: 24.11.2004
(73) Titulaire: ROBERT BOSCH GMBH, 70442 Stuttgart (DE)
(72) Inventeur: Richard, Philippe, 77500 Chelles (FR); Michon, Jean-Pierre, 77178 Saint Pathus (FR)
(74) Mandataire: Hurwic, Aleksander Wiktor

(56) Documents cités:
- EP-A- 0 509 866
- US-A- 5 782 159
- US-A- 5 799 559

## Description

L'invention concerne les amplificateurs de force de freinage à dépression pour véhicule automobile. Le Document US5799559 décrit un amplificateur de freinage par un véhicule. Ce document est consideré comme l'état de la technique

De tels amplificateurs sont bien connus de façon générale. Ils permettent de fournir au maître-cylindre une assistance à l'effort de freinage fourni par la pédale de frein. On se référera ici en particulier à celui décrit dans le brevet EP-0 509 866. L'amplificateur comprend une cavité dans laquelle une paroi mobile sépare une chambre à dépression en communication permanente avec une source de vide et une chambre de travail. L'amplificateur comprend un obturateur relié à la pédale de frein et apte à venir en appui sur un siège contigu à une chambre intermédiaire en communication permanente avec la chambre à dépression.

Lorsqu'il est distant du siège, l'obturateur met la chambre intermédiaire en communication avec la chambre de travail de sorte que la chambre de travail est soumise au vide partiel régnant dans la chambre à dépression. C'est la situation de l'amplificateur au repos. Lorsqu'une action de freinage est demandée, l'obturateur isole la chambre intermédiaire par rapport à la chambre de travail puis met cette dernière progressivement en communication avec l'air atmosphérique. La pression s'accroît donc dans la chambre de travail, ce qui déplace dans la cavité la paroi mobile reliée au maître cylindre. Lorsque la commande de freinage s'interrompt, l'obturateur recule pour s'éloigner de son siège et remettre la chambre intermédiaire en communication avec la chambre de travail.

Mais à ce stade, puisqu'une pression relativement faible règne dans la chambre intermédiaire et qu'une pression plus forte règne dans la chambre de travail, l'obturateur est souvent plaqué sur son siège par la différence de pression. Le plongeur qui actionne l'obturateur à cette fin doit donc fournir un effort substantiel pour décoller l'obturateur de son siège.

De plus, la charge et donc la raideur du ressort associé à l'obturateur doit être relativement élevée. Ces deux facteurs génèrent une hystérésis entre la courbe aller et la courbe retour reliant l'effort en sortie de l'amplificateur à l'effort d'entrée. Cette hystérésis se traduit en pratique par une dissymétrie de sensation entre l'application et le relâché de la pédale de frein par le conducteur.

Un but de l'invention est de faire en sorte que l'action d'arrêt de freinage suive la commande correspondante sans retard.

A cet effet, on prévoit selon l'invention un amplificateur de freinage pour véhicule, comportant :
- une chambre à dépression ;
- une chambre de travail ;
- un obturateur ; et
- une chambre intermédiaire communiquant avec la chambre à dépression et formant un siège pour l'obturateur de sorte que l'obturateur est apte à mettre la chambre intermédiaire en communication avec la chambre de travail et à interdire cette communication, le siège étant formé de plusieurs zones séparées.

Ainsi, on réduit la superficie de l'obturateur soumise à la pression modérée régnant dans chambre intermédiaire. La sollicitation générée sur l'obturateur par la différence de pression entre la chambre intermédiaire et la chambre de travail se trouve donc réduite en conséquence. Dès lors, lorsque la commande de freinage cesse, l'obturateur peut être décollé du siège avec un effort réduit en réduisant l'effet de collage. De surcroît, on peut réduire la charge, et donc la raideur du ressort associé à l'obturateur, à charge linéique constante. Ces deux facteurs permettent de réduire l'hystérésis entre la courbe aller et la courbe retour reliant l'effort en sortie de l'amplificateur à l'effort d'entrée. On réduit ainsi la dissymétrie de la sensation associée à la pédale entre l'application et le relâché.

L'amplificateur selon l'invention présente également les caractéristiques suivantes :
- les zones se succèdent suivant une direction circonférentielle à un axe principal de l'amplificateur ;
- les zones sont circulaires ;
- les zones sont au moins au nombre de trois ;
- le siège s'étend dans un plan perpendiculaire à un axe principal de l'amplificateur ;
- la chambre intermédiaire comprend plusieurs conduits séparés dont des extrémités respectives forment les zones

L'amplificateur selon l'invention pourra également présenter au moins l'une quelconque des caractéristiques suivantes :
- les zones sont de préférence au moins au nombre de quatre ;
- l'amplificateur comprend une paroi formant la chambre intermédiaire et présentant des évidements entre les zones en direction circonférentielle par référence à un axe principal de l'amplificateur ;
- les évidements s'étendent entre les conduits ;
- la paroi forme un boîtier, les évidements débouchant radialement vers l'intérieur du boîtier, vers l'extérieur du boîtier ou les deux à la fois;
- le siège a une section perpendiculaire à l'axe de superficie comprise entre 50.10⁻⁶ et 150.10⁻⁶ m² ; et
- l'amplificateur comporte un outil traversant au moins l'un des évidements, cet outil étant par exemple une clé de réglage d'une position d'un plongeur de l'amplificateur par rapport au boîtier.

D'autres caractéristiques et avantages de l'invention apparaîtront encore dans la description suivante d'un mode préféré de réalisation donné à titre d'exemple non limitatif. Aux dessins annexés :
- la figure 1 est une vue partielle en coupe axiale longitudinale d'un amplificateur selon un mode préféré de réalisation de l'invention, la coupe étant réalisée suivant les deux demi-plans I-I illustrés à la figure 2 ;
- la figure 2 est une vue partielle en coupe transversale suivant le plan II-II de l'amplificateur de la figure 1; et
- la figure 3 illustre l'allure de la courbe entre l'effort d'entrée et l'effort de sortie de l'amplificateur selon l'invention.

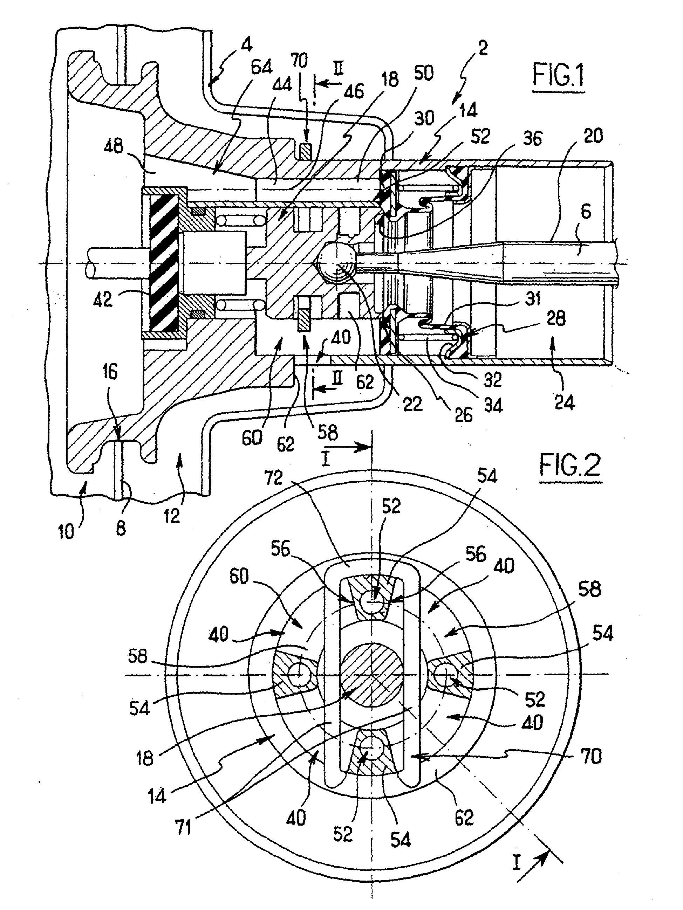

L'amplificateur 2 illustré à la figure 1 est un amplificateur d'assistance au freinage prévu pour être placé de façon habituelle entre la pédale de frein d'un véhicule automobile et le maître-cylindre commandant le circuit de freinage hydraulique de ce véhicule. Par convention, on appelle *avant* de l'amplificateur la partie de ce dernier tournée vers le maître-cylindre et orientée vers la gauche sur la figure 1, et *arrière* la partie tournée vers la pédale de frein et orientée vers la droite sur la même figure.

L'amplificateur comprend une enveloppe extérieure 4 en forme de coquille présentant une symétrie de révolution autour d'un axe principal central 6 de l'amplificateur. Cette enveloppe a été représentée de façon schématique sur la figure 1. L'amplificateur comprend une membrane 8 définissant à l'intérieur de l'espace délimité par l'enveloppe 4 une chambre avant 10 que nous appelons ici *chambre à dépression* et une chambre arrière 12 que nous appelons *chambre de travail,* la membrane 8 séparant ces deux chambres l'une de l'autre. L'amplificateur comporte un boîtier 14 ou piston d'axe 6 présentant une partie avant évasée. La membrane 8 présente un bord central circulaire 16 d'axe 6 fixé à l'extrémité libre de la partie évasée du boîtier 14.

L'amplificateur comporte un plongeur 18 reçu mobile à coulissement dans un évidemment central du boîtier 14. Le plongeur présente lui aussi une symétrie de révolution autour de l'axe 6. L'amplificateur comporte une tige de commande 20 d'axe 6 dont une extrémité avant 22 est fixée au moyen d'une liaison rotule dans un logement arrière du plongeur 18. L'extrémité arrière de cette tige 20, non illustrée, fait saillie à l'extérieur du boîtier pour être commandée directement par la pédale de frein du véhicule non représentée.

La tige 20 et une partie arrière tubulaire du boîtier 14 délimitent un espace arrière annulaire 24 en communication d'air avec l'air atmosphérique par l'intermédiaire d'un filtre à air non représenté.

L'amplificateur comporte une valve à trois voies 26 apte à mettre la chambre de travail 12 en communication tantôt avec la chambre à dépression 10 tantôt avec l'air atmosphérique de l'espace arrière 24. L'amplificateur comprend un manchon souple 28 en élastomère présentant une partie avant 31 qui forme un obturateur de la valve 26. Le manchon 28 a une forme symétrique de révolution d'axe 6. Il comprend une partie arrière allant en s'élargissant vers l'arrière et fixée à son bord d'extrémité de façon étanche à l'intérieur de la partie arrière tubulaire du boîtier 14 de façon à délimiter vers l'avant l'espace 24. Cette partie arrière est maintenue en place au moyen d'une coupelle métallique 32 prenant appui sur une face avant de cette partie arrière et elle-même sollicitée vers l'arrière par un ressort de compression 34. Ce dernier prend appui vers l'arrière sur la coupelle 32 et vers l'avant contre une face arrière de l'obturateur 30. Le ressort sollicite donc l'obturateur vers l'avant. Au cours de son mouvement, l'obturateur 30 demeure en contact avec la face interne cylindrique du boîtier 14

Le plongeur 18 présente un bord d'extrémité arrière 36 de forme annulaire qui constitue un premier siège pour l'obturateur 30. Ce siège est ininterrompu en direction circonférentielle autour de l'axe 6.

La chambre de travail 12 communique avec l'intérieur du boîtier 14, au niveau de sa partie avant située à l'avant de l'obturateur 30 au moyen de plusieurs orifices 40 qui seront décrits en détails plus bas. Chaque orifice présente un axe radial à l'axe 6, est ménagé dans un côté du boîtier et débouche à l'intérieur de celui-ci.

Lorsque le plongeur est reculé suffisamment de sorte que le siège 36 n'est plus en contact avec l'obturateur, l'espace arrière 24 du boîtier se trouve en communication d'air avec la chambre de travail 12 à travers les orifices 40.

L'amplificateur comporte d'autres éléments connus en eux-mêmes et qui n'ont pas été décrits en détail tels qu'un ressort de rappel de la membrane 8 ou un disque de réaction 42 s'étendant dans le prolongement du plongeur vers l'avant. Pour tous les éléments classiques de l'amplificateur qui n'ont pas été décrits, on pourra se référer par exemple au brevet EP-0 509 866.

L'intérieur du boîtier 14 débouche à son extrémité avant dans la chambre de dépression 10 qui est elle-même par ailleurs en communication permanente avec une source de vide du véhicule non représentée. Dans la paroi principale du boîtier lui conférant sa forme générale tubulaire sont ménagés des conduits 44, en l'espèce au nombre de quatre mais dont le nombre pourrait être différent. Les conduits 44 sont identiques entre eux. Chaque conduit 44 a une forme générale allongée parallèlement à l'axe 6 et présente un axe 46 parallèle à ce dernier. Les conduits 44 s'étendent autour du plongeur 18. Chaque conduit présente un tronçon avant 48 dont la forme est telle qu'il tend à s'éloigner de l'axe 6. Ce tronçon débouche dans la chambre à dépression 10 à l'extrémité avant du boîtier. Chaque conduit 44 comprend par ailleurs un tronçon arrière 50 de forme cylindrique. En l'espèce, les tronçons avant 48 et arrière 50 constituent le conduit 44. L'extrémité arrière 52 du tronçon cylindrique 50 débouche directement en regard de l'obturateur 30 en vue d'être contiguë à celui-ci.

Comme le montrent les figures 1 et 2, la paroi du boîtier 14 présente en l'espèce des renflements 54 dont le nombre égale celui des conduits 44, s'étendant d'avant en arrière du boîtier sur toute la longueur des conduits et s'étendant par ailleurs en saillie suivant la direction radiale à l'intérieur du boîtier. Chacun des renflements 54 a une forme profilée parallèlement à l'axe 6, la forme du profil en section perpendiculaire à l'axe 6 étant essentiellement celle d'un trapèze. Chaque renflement présente ainsi deux faces latérales 56 allant en divergeant l'une par rapport à l'autre à mesure que l'on s'éloigne de l'axe central 6. La forme même de ces renflements ménage entre eux des évidements 58 disposés entre les renflements successifs en direction circonférentielle par référence à l'axe 6. Les conduits 44 sont ménagés dans les renflements 54 respectifs. Les uns et les autres sont régulièrement répartis autour de l'axe 6 suivant un motif en croix. Il en est donc de même pour les quatre évidements 58 s'étendant entre ceux-ci.

Les quatre évidements 58 définissent une chambre avant 60 interne au boîtier. Dans cette chambre, les évidements 58 communiquent les uns avec les autres au moyen de gorges annulaires 62 ménagées dans une face externe du plongeur 18. Les évidements 58 débouchent radialement en direction de l'axe à l'intérieur du boîtier. La chambre avant est délimitée en direction radiale vers l'axe 6 par la face externe du plongeur et en direction opposée à l'axe 6 par la paroi du boîtier. Cette même paroi délimite aussi la chambre vers l'avant tandis que la chambre est apte à être obturée vers l'arrière par l'obturateur 30. La chambre 60 est contiguë aux orifices 40. L'espace arrière 24 du boîtier peut être mis en communication d'air avec la chambre de travail 12 par l'intermédiaire de cette chambre 60 et via le passage central du manchon 28.

Les orifices 40 sont disposés dans la paroi du boîtier aux endroits laissés libres par les renflements 54 et donc entre ceux-ci. Les orifices 40 sont ici au nombre de quatre et eux aussi régulièrement répartis autour de l'axe 6. Au niveau des orifices 40, les évidements 58 sont donc également en communication suivant la direction radiale avec l'extérieur du boîtier c'est-à-dire avec la chambre de travail 12. Toutefois, les orifices 40 s'étendent sur une fraction seulement de la longueur des évidements 58 parallèlement à l'axe 6, typiquement sur la moitié de cette longueur. Ils sont contigus par l'avant à un épaulement 62 formé dans la face externe du boîtier et qui tend à élargir celle-ci.

Les conduits 44 délimitent à eux quatre une chambre intermédiaire 64 en communication d'air permanente et directe avec la chambre à dépression 10.

Les embouchures arrière 52 des conduits 44 constituent les unes avec les autres des zones formant un second siège pour l'obturateur 30. Les zones 52 séparées les unes des autres suivant la direction circonférentielle par référence à l'axe définissent par conséquent les différentes parties du siège. Le siège 52 s'étend dans un plan perpendiculaire à l'axe 6. Ainsi, lorsque l'obturateur 30 est en appui vers l'avant contre l'extrémité arrière libre des renflements 54 et que des conditions de pression adaptées sont remplies, cet obturateur obture de façon étanche chacun des quatre conduits 44. Les portions de l'obturateur 30 qui ne sont pas en contact avec les renflements 54 s'étendent alors en regard des évidements 58.

L'amplificateur fonctionne de façon analogue à la plupart des amplificateurs antérieurs. Au repos, le plongeur 18 se trouve dans une position reculée (mais pas la plus reculée) avec son siège 36 en appui sur l'obturateur 30 de sorte que l'espace arrière 24 est isolé de la chambre avant 60 du boîtier. Il s'agit d'une position intermédiaire du plongeur. En revanche, puisque l'obturateur s'étend à distance des conduits 44, il laisse libre la communication d'air entre ceux-ci et la chambre avant 60 de sorte que la chambre de travail 12 se trouve en communication d'air avec la chambre à dépression 10 et est donc soumise au vide partiel régnant en permanence dans cette dernière.

Lorsque le conducteur du véhicule actionne la pédale de frein, il produit une avancée de la tige 20 avec le plongeur 18, ce qui a pour effet tout d'abord de placer l'obturateur 30 en appui sur le siège définit par l'extrémité arrière des conduits 44. La chambre intermédiaire 64 se trouve donc isolée de la chambre avant 60. La poursuite du mouvement du plongeur éloigne son siège 36 par rapport à l'obturateur 30 mettant ainsi la chambre avant 60 en communication d'air avec l'espace arrière 24, ce qui a pour effet de commencer à remplir d'air atmosphérique la chambre de travail 12 et qui pourra conduire à un déplacement vers l'avant de la membrane 8 avec le boîtier 14 pour la commande du maître-cylindre.

Lorsque cesse la commande de freinage, la tige 20 recule ainsi que le plongeur 18, ce qui place ce dernier en contact avec l'obturateur 30 et interrompt par conséquent la communication d'air entre la chambre avant 60 et l'espace arrière 24. La poursuite du recul du plongeur décolle dans un deuxième temps l'obturateur des renflements 54 afin de rétablir la communication d'air entre la chambre intermédiaire 64 et la chambre de travail 12.

Le plongeur prend ensuite une position reculée extrême assurant une mise en communication maximale des chambres avant et arrière pour un retour rapide du servomoteur en position de repos. Il reprend enfin la position de repos.

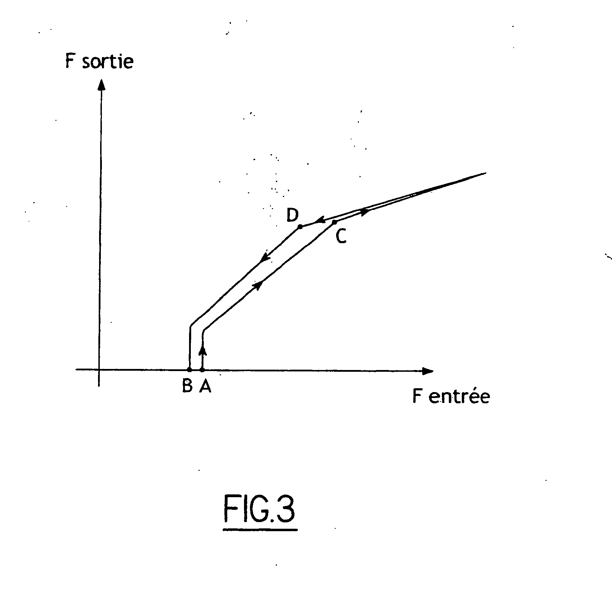

Sachant que la superficie de l'obturateur soumise au vide partiel régnant initialement dans la chambre intermédiaire 64 est relativement réduite, le décollement de l'obturateur par rapport au siège 52 est obtenu au moyen d'un effort modéré du plongeur 18 On a illustré à la figure 3 l'allure de la courbe indiquant l'évolution de l'intensité de l'effort de sortie fourni par l'applicateur en fonction de l'effort d'entrée appliqué au moyen de la pédale de frein par le conducteur.

Le point A indique l'effort d'attaque appliqué par le conducteur pour générer un effort de sortie.

Le point C est le point de saturation à l'application, c'est-à-dire celui à partir duquel l'effort de sortie augmente relativement peu par rapport à l'effort d'entrée.

Le point D est le point de retour après saturation. Il marque le phénomène inverse, lorsque le conducteur décroît son effort sur la pédale.

Le point B indique l'intensité de l'effort fourni par le conducteur lorsque l'amplificateur cesse de produire un effort de sortie.

Le décalage entre la course d'attaque et la course de retour correspond à l'hystérésis précitée.

Celle-ci peut être réduite à deux niveaux au moyen de l'invention.

Tout d'abord, le décalage entre les points D et C peuvent être réduits par deux facteurs :
- d'une part en réduisant l'effet de collage de l'obturateur dû à l'aspiration. La contribution relative de ce facteur à cette réduction par rapport au second facteur est d'environ 25%. Pour cela, la superficie du siège 52 peut être réduite par exemple de 3,35 cm² à 80 mm².
- d'autre part en réduisant de 25 à 30% la charge du ressort de clapet 34, ce qui contribue à la réduction de l'hystérésis entre les points D et C pour une proportion relative de 75%.

Ensuite, le décalage entre les points A et B se trouve lui aussi réduit par la réduction de la charge du ressort.

Les tronçons arrière cylindriques 50 ont ici un diamètre de 5 mm. On constate expérimentalement qu'une course vers l'arrière de 1,46 mm du plongeur suffit à décoller l'obturateur du siège 52. Alors que l'effort du plongeur sur l'obturateur à cette fin peut être de 27 Newtons dans l'art antérieur, il peut être ramené en l'espèce à 0,16 N. Le siège 52 a de préférence une superficie comprise entre 50 mm² et 150 mm². L'économie de matière engendrée par les évidements 58 permet également de réduire le poids de l'amplificateur.

Le fait de réaliser la chambre intermédiaire 64 non pas sous forme annulaire continue mais sous forme discontinue avec les quatre conduits 44 permet de dégager des espaces libres formés par les évidements 58 éventuellement en communication avec l'intérieur et l'extérieur du boîtier. Comme l'illustrent les figures, cet espace peut être utilisé pour loger un outil tel qu'une clé 70 permettant de façon connue en soi de régler la position intermédiaire du plongeur 18 par rapport au boîtier 14, c'est-à-dire la position intermédiaire précitée associée au repos. Des appuis adaptés de la clé sur le boîtier d'une part et le plongeur d'autre part permettent de définir la position précitée. La clé permet de définir précisément le jeu entre le boîtier et le plongeur en position de repos de ce dernier, et ce de façon à réduire autant que possible la course morte du plongeur.

La clé 70 a en l'espèce une forme générale plane inscrite dans un plan perpendiculaire à l'axe 6. La clé est formée sous la forme d'une tige pliée pour lui donner une forme générale en « U » renversé dont les deux branches 71 sont rectilignes et allongées. Le U est monté à cheval sur le renflement supérieur 54 s'étendant dans le plan vertical de symétrie de l'amplificateur, la base 72 du U venant en appui par l'extérieur radialement contre ce renflement. Les deux branches 71 s'étendent verticalement parallèlement à ce plan en étant reçues dans une gorge ménagée dans la face externe du plongeur 18. Les deux branches 71 s'étendent verticalement vers le bas entre le plongeur 18 et les deux renflements gauche et droite 54 respectivement, puis plus bas en regard des faces latérales 56 du renflement inférieur 54. Les extrémités libres des branches s'étendent au-delà de ce dernier.

Bien entendu, on pourra apporter à l'invention de nombreuses modifications sans sortir du cadre de celle-ci.

On pourra varier le nombre de zones formant le siège 52 de la chambre intermédiaire. On pourra faire en sorte que les différentes zones de siège débouchent sur une courte distance vers l'avant dans une chambre annulaire, de sorte que les conduits 44 sont beaucoup plus courts que dans le présent mode de réalisation. On pourra proposer d'autres formes pour le profil des zones de ce siège, par exemple une forme ovale allongée suivant la direction circonférentielle ou encore une forme rectangulaire.

## Revendications

1. Amplificateur de freinage pour véhicule, comportant :
- une chambre à dépression (10) ;
- une chambre de travail (12) ;
- un obturateur (30) ; et
- une chambre intermédiaire (64) communiquant avec la chambre à dépression (10) et formant un siège (52) pour l'obturateur de sorte que l'obturateur est apte à mettre la chambre intermédiaire en communication avec la chambre de travail et à interdire cette communication,
**caractérisé en ce que :**
- le siège (52) est formé de plusieurs zones séparées ;
- les zones se succèdent suivant une direction circonférentielle autour d'un axe principal (6) de l'amplificateur
- les zones sont circulaires et sont au moins au nombre de trois ;
- ledit siège (52) s'étend dans un plan perpendiculaire à un axe principal (6) de l'amplificateur et ;
- la chambre intermédiaire (64) comprend plusieurs conduits séparés (44) dont des extrémités respectives forment les zones.

2. Amplificateur selon la revendication 1, **caractérisé en ce que** les zones sont au moins au nombre de quatre.

3. Amplificateur selon l'une quelconque des revendications 1 ou 2, **caractérisé en ce que** le siège (52) a une section perpendiculaire à l'axe (6) de superficie comprise entre 50.10⁻⁶ et 150.10⁻⁶ m².

4. Amplificateur selon l'une quelconque des revendications 1 à 3, **caractérisé en ce qu'**il comprend une paroi formant la chambre intermédiaire (64) et présentant des évidements (58) entre les zones en direction circonférentielle par référence à un axe principal (6) de l'amplificateur.

5. Amplificateur selon la revendication 4, **caractérisé en ce que** les évidements (58) s'étendent entre les conduits (44).

6. Amplificateur selon l'une quelconque des revendications 4 ou 5, **caractérisé en ce que** la paroi forme un boîtier (14), les évidements (58) débouchant radialement vers l'intérieur du boîtier.

7. Amplificateur selon l'une quelconque des revendications 4 à 6, **caractérisé en ce que** la paroi forme un boîtier (14), les évidements (58) débouchant radialement vers l'extérieur du boîtier.

8. Amplificateur selon l'une quelconque des revendications 4 à 7, **caractérisé en ce que** la paroi forme un boîtier (14), les évidements (58) débouchant radialement à la fois vers l'extérieur et vers l'intérieur du boîtier.

9. Amplificateur selon l'une quelconque des revendications 4 à 8, **caractérisé en ce qu'**il comporte un outil (70) traversant au moins l'un des évidements (58), cet outil étant par exemple une clé de réglage d'une position d'un plongeur (18) de l'amplificateur par rapport à un boîtier (14) de l'amplificateur.

## Claims

1. Braking amplifier for a vehicle, comprising:
- a depression chamber (10);
- a working chamber (12);
- a shutter (30); and
- an intermediate chamber (64) communicating with the depression chamber (10) and forming a seat (52) for the shutter such that the shutter is able to place the intermediate chamber in communication with the working chamber and to prevent this communication,
**characterized in that :**
- the seat (52) is formed by several separate zones ;
- the zones succeed one another in a circumferential direction about a main axis (6) of the amplifier ;
- the zones are circular and there are at least three zones ;
- the seat (52) lies in a plane perpendicular to a main axis (6) of the auxiliary amplifier;
- the intermediate chamber (64) comprises several separate ducts (44) whose respective ends form the zones ;

2. Amplifier according to Claim 1, **characterized in that** there at at least four zones ;

3. Amplifier according to any one of Claims 1 to 2, **characterized in that** the seat (52) has a cross section perpendicular to the axis (6) with an area of between 50×10⁻⁶ and 150×10⁻⁶ m².

4. Amplifier according to any one of Claims 1 to 3, **characterized in that** it comprises a wall forming the intermediate chamber (64) and having cavities (58) between the zones in the circumferential direction with reference to a main axis (6) of the amplifier.

5. Amplifier according to Claim 4, **characterized in that** the cavities (58) extend between the ducts (44).

6. Amplifier according to either of Claims 4 and 5, **characterized in that** the wall forms a housing (14), the cavities (58) opening radially toward the inside of the housing.

7. Amplifier according to any one of Claims 4 to 6, **characterized in that** the wall forms a housing (14), the cavities (58) opening radially toward the outside of the housing.

8. Amplifier according to any one of Claims 4 to 7, **characterized in that** the wall forms a housing (14), the cavities (58) opening radially both toward the outside and toward the inside of the housing.

9. Amplifier according to any one of Claims 4 to 8, **characterized in that** it includes a tool (70) passing through at least one of the cavities (58), this tool being, for example, a wrench for adjusting a position of a plunger (18) of the amplifier with respect to a housing (14) of the amplifier.

## Patentansprüche

1. Bremsverstärker für ein Fahrzeug, mit:
- einer Unterdruckkammer (10);
- einer Arbeitskammer (12);
- einem Verschluss (30); und
- einer Zwischenkammer (64), die mit der Unterdruckkammer (10) verbunden ist und einen Sitz (52) für den Verschluss bildet, so dass der Verschluss die Zwischenkammer mit der Arbeitskammer verbinden und diese Verbindung verhindern kann,
**dadurch gekennzeichnet, dass:**
- der Sitz (52) aus mehreren getrennten Bereichen besteht;
- die Bereiche gemäß einer Umfangsrichtung um eine Hauptachse (6) des Verstärkers nacheinander angeordnet sind;
- die Bereiche kreisförmig sind und mindestens drei Bereiche vorhanden sind;
- der Sitz (52) sich in einer zu einer Hauptachse (6) des Verstärkers senkrechten Ebene erstreckt; und
- die Zwischenkammer (64) mehrere getrennte Leitungen (44) aufweist, wobei ihre jeweiligen Enden die Bereiche bilden.

2. Verstärker nach Anspruch 1, **dadurch gekennzeichnet, dass** mindestens vier Bereiche vorhanden sind.

3. Verstärker nach Anspruch 1 oder 2, **dadurch gekennzeichnet, dass** der Sitz (52) einen zur Achse (6) senkrechten Querschnitt aufweist, dessen Fläche zwischen 50,10⁻⁶ und 150,10⁻⁶ m² beträgt.

4. Verstärker nach einem der Ansprüche 1 bis 3, **dadurch gekennzeichnet, dass** er eine Wand aufweist, die die Zwischenkammer (64) bildet und bezüglich einer Hauptachse (6) des Verstärkers in Umfangsrichtung Vertiefungen (58) zwischen den Bereichen aufweist.

5. Verstärker nach Anspruch 4, **dadurch gekennzeichnet, dass** sich die Vertiefungen (58) zwischen den Leitungen (44) erstrecken.

6. Verstärker nach Anspruch 4 oder 5, **dadurch gekennzeichnet, dass** die Wand ein Gehäuse (14) bildet, wobei die Vertiefungen (58) radial zum Inneren des Gehäuses münden.

7. Verstärker nach einem der Ansprüche 4 bis 6, **dadurch gekennzeichnet, dass** die Wand ein Gehäuse (14) bildet, wobei die Vertiefungen (58) radial zum Äußeren des Gehäuses münden.

8. Verstärker nach einem der Ansprüche 4 bis 7, **dadurch gekennzeichnet, dass** die Wand ein Gehäuse (14) bildet, wobei die Vertiefungen (58) radial sowohl zum Äußeren als auch zum Inneren des Gehäuses münden.

9. Verstärker nach einem der Ansprüche 4 bis 8, **dadurch gekennzeichnet, dass** er ein Werkzeug (70) aufweist, das mindestens eine der Vertiefungen (58) durchquert, wobei dieses Werkzeug beispielsweise ein Schlüssel zum Einstellen einer Position eines Tauchkolbens (18) des Verstärkers in Bezug auf ein Gehäuse (14) des Verstärkers ist.
